# EUROPEAN PATENT APPLICATION

(11) **EP 4 613 912 A1**
(43) Date of publication of application: **10.09.2025**
(21) Application number: 23885019.2
(22) Date of filing: 02.11.2023
(51) Int. Cl.: C25B 11/042, C25B 11/04, C25B 9/00, C25B 1/23

(54) **CATHODE MATERIAL FOR SOLID OXIDE ELECTROLYTIC CELL, AND PREPARATION METHOD THEREFOR AND USE THEREOF**

(30) Priority: 02.11.2022 CN 202211364817
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: LI, Yifeng, Beijing 100013 (CN); WU, Changjiang, Beijing 100013 (CN); ZHANG, Longgui, Beijing 100013 (CN); JI, Wenxi, Beijing 100013 (CN); ZHANG, Libo, Beijing 100013 (CN); XU, Ning, Beijing 100013 (CN); CHEN, Jing, Beijing 100013 (CN)
(74) Representative: Hoffmann Eitle
(86) International application number: PCT/CN2023/129203
(87) International publication number: WO 2024/094093

(57) **Abstract**

The present invention relates to a cathode material for a solid oxide electrolytic cell and its preparation and use. The cathode material for the solid oxide electrolytic cell has a molecular formula of LaₓSr₁₋ₓFe_{0.8}Cu_{y}Ni_{0.2-y}O_{3-δ}, wherein 0.1≤x≤0.9, 0.01≤y<0.2, and 0≤δ≤0.5. An electrolytic cell prepared by using the cathode material can efficiently convert CO₂ and H₂O into synthesis gas through electrochemical catalysis. Furthermore, the electrolytic cell can achieve continuous and stable operation of high-temperature electrolysis of water vapor and/or carbon dioxide at a temperature of 800°C and an electrolysis current density of 0.5 A/cm² or more, thereby having good prospects for industrial application.

## Description

### Technical field

The present disclosure relates to technical field of solid oxide electrolytic cells (SOECs), and particularly relates to a cathode material for a solid oxide electrolytic cell and its preparation and use.

### Background

In recent years, more attention has been paid on greenhouse gas emission reduction and environmental protection. Accordingly, the technology for efficiently converting and utilizing CO₂ has attracted great attention from scientists around the world. As a new type of electrochemical energy storage device, a high-temperature solid oxide electrolytic cell can electrolyze CO₂ and water vapor into hydrocarbon fuels such as synthesis gas. It realizes the efficient conversion of electrical energy into chemical energy and has broad application prospects.

At present, high-temperature electrolysis technology for electrolyzing water vapor has achieved good results in both laboratory and pilot scales, and has been exemplarily applied in industrial practice. However, it is still almost blank in the industrial application of high-temperature electrolysis technology for electrolyzing CO₂. In order to realize the large-scale application of high-temperature electrolysis technology for electrolyzing CO₂ in industry, it is necessary to meet the demands of high yield and operation stability at the same time. That is, the high-temperature electrolysis for electrolyzing CO₂ shall be operated continuously and stably at a large current density (such as >0.5A/cm²). It may place high requirements on performances of the cathode (also known as a hydrogen electrode) of the electrolytic cell. On the one hand, due to the fact that CO₂ has a molecular structure much more stable than that of H₂O molecules, the split of CO₂ is more difficult to occur than the split of H₂O from the points of both thermodynamics and kinetics, which may require the cathode to have higher catalytic activity. On the other hand, side reactions such as carbon deposition may be associated with the electrolysis of CO₂, which may place higher requirements on the operation stability of the cathode material.

Although the currently developed SOEC cathode materials may have improved activity and stability in high-temperature electrolysis to a certain degree, they still cannot meet the requirements for continuously and stably electrolyzing CO₂ at a high temperature and a large current.

CN104388972A discloses a cathode material for a solid oxide electrolytic cell and use of the same. The concerned hydrogen electrode material has a chemical composition of Sr₂Fe₁₋ₓMₓMoO_{6-δ}, wherein 0≤x≤1.0; M is at least one metallic ion selected from the group consisting of Mg, Zn, Ni, Co, Cu and Mn. The hydrogen electrode material possesses considerable electrochemical performance and high efficiency during electrochemical high temperature H₂O split and hydrogen production. However, the electrode material is not reported to be used in high temperature CO₂ electrolysis.

CN113782798A discloses a hydrogen electrode material for a solid oxide electrolytic cell and use of the same. The hydrogen electrode material for the solid oxide electrolytic cell has a chemical composition of La₁₋ₓSrₓFe_{1-y}Nb_{y}O_{3-δ}, wherein 0.1<x<0.6, 0.1<y<0.2, and 0≤δ≤0.5. It is said that the hydrogen electrode material can keep chemical stability in a high-temperature and high-humidity environment and under a reductive atmosphere, may have relative high catalytic activity on the electrochemical reduction of H₂O and CO₂, and can be stably operated under an atmosphere of mixed water vapor and carbon dioxide at an electrolysis current density of up to 0.71A/cm².

CN106498435A discloses a cathode material for a solid oxide electrolytic cell and the preparation of the same. The hydrogen electrode material for the solid oxide electrolytic cell has a molecular formula of LaₓSr_{0.9-x}Ti_{0.6}Ni_{0.4}O_{3-δ}, wherein 0.2≤x≤0.8. It is said that the hydrogen electrode material has in-situ exsolved Ni metallic nanoparticles at surface, which improves catalytic activity and reduces polarization resistance. Additionally, it can still keep structural stability at high electrolysis voltage and have good electro-catalytic performance. However, the electrode material is not reported to be used in electrolyzing CO₂ at high temperatures.

Though the cathode materials of the prior art may perform well in the applications of high-temperature electrolysis of H₂O or H₂O/CO₂ mixture, those electrode materials are rarely reported to be used in the high-temperature electrolysis of CO₂. In particular, there is no report on using those cathode materials at a large current density (i.e. >0.5A/cm²) in achieving the high-temperature electrolysis of CO₂ continuously and stably. The reason may be that the current SOEC cathode materials may have insufficient catalytic activity and stability for the electrochemical conversion of water vapor and carbon dioxide.

To address the above problems, following difficulties may be faced. Since CO₂ has a molecular structure much more stable than that of H₂O molecules, the electrolysis of CO₂ is more difficult to occur than the electrolysis of H₂O from the points of both thermodynamics and kinetics, which may require the cathode to have higher catalytic activity. In addition, the electrolysis of CO₂ may be associated with side reactions such as cathode carbon deposition, which may place higher requirements on the operation stability of the cathode in electrolysis.

### Summary of the invention

The present disclosure is to address the problems of insufficient activity for electrolyzing CO₂ and difficulty for electrolyzing at a high current density which are associated with the cathode materials of the prior art. In this regard, provided in the present disclosure is a perovskite oxide type of cathode material and an electrolytic cell using the cathode material, which have high activity and high stability. The cathode material and the electrolytic cell in accordance with the present disclosure can efficiently convert CO₂ and H₂O into synthesis gas through electrochemical catalysis, thereby achieving efficient conversion and utilization of carbon-based energy. In addition, the cathode material and the electrolytic cell in accordance with the present disclosure may achieve a stable operation of the electrolysis of CO₂ or H₂O respectively at a current density of 0.5A/cm² or more. The present disclosure also relates to a method for preparing the cathode material and the electrolytic cell, as well as use of the cathode material and the electrolytic cell.

In the first aspect, provided in the present disclosure is a cathode material for a solid oxide electrolytic cell, having a molecular formula of LaₓSr₁₋ₓFe_{0.8}Cu_{y}Ni_{0.2-y}O_{3-δ}, wherein 0.1<x<0.9, 0.01≤y<0.2, and 0≤δ≤0.5.

In the second aspect, provided in the present disclosure is a method for preparing the above mentioned cathode material for the solid oxide electrolytic cell, comprising steps of:
mixing a lanthanum salt, a strontium salt, an iron salt, a copper salt, a nickel salt, and optionally, a complexing agent, and then subjecting to drying and calcining, to obtain the cathode material;
wherein lanthanum, strontium, iron, copper and nickel of the lanthanum salt, the strontium salt, the iron salt, the copper salt and the nickel salt are in a molar ratio of x:(1-x):0.8:y:(0.2-y), wherein 0.1≤x≤0.9 and 0.01≤y<0.2.

In the third aspect, provided in the present disclosure is use of the above mentioned cathode material for the solid oxide electrolytic cell or the cathode material for the solid oxide electrolytic cell prepared by the above mentioned method in preparing a solid oxide electrolytic cell.

In the fourth aspect, provided in the present disclosure is a method for preparing a solid oxide electrolytic cell, comprising steps of:
applying an anode material and a cathode material respectively on each of the two sides of a solid electrolyte; and
reducing the cathode material,
wherein the cathode material is the above mentioned cathode material or the cathode material prepared by the above mentioned method.

In the fifth aspect, provided in the present disclosure is the solid oxide electrolytic cell prepared by the above mentioned method.

In the sixth aspect, provided in the present disclosure is use of the above mentioned solid oxide electrolytic cell in electrolyzing water vapor and/or carbon dioxide.

The present disclosure may include the following items.
1. A cathode material for a solid oxide electrolytic cell, characterized in that, the cathode material for the solid oxide electrolytic cell has a molecular formula of La_{0.6}Sr_{0.4}Fe_{0.8}CuₓNi_{y}O_{3-δ}, wherein 0.01≤x≤0.2, 0.01≤y≤0.2, and x+y=0.2,
   preferably, 0.05<x<0.15 and 0.05<y<0.15.
2. A method for preparing the cathode material for the solid oxide electrolytic cell of item 1, characterized in that, the method comprises steps of:
   A1: mixing a lanthanum salt, a strontium salt, an iron salt, a copper salt, a nickel salt and water, to obtain a mixed solution;
   A2: mixing the mixed solution with ethylenediamine tetraacetic acid, adjusting pH to 7-10, then drying and calcining;
   wherein, in step A1, lanthanum, strontium, iron, copper and nickel of the lanthanum salt, the strontium salt, the iron salt, the copper salt and the nickel salt are in a molar ratio of 0.6:0.4:0.8:x:y.
3. The method of item 2, characterized in that, in step A2, ethylenediamine tetraacetic acid and metal ions in the mixed solution are in a molar ratio of 1-1.5:1.
4. The method of item 2 or 3, characterized in that, metal ions are present in the mixed solution in a total content of 1-2mol/L.
5. The method of any one of items 2-4, characterized in that, in step A2, the calcining is operated under conditions of: at a calcination temperature of 600-800°C, for a calcination time of 1-2h.
6. Use of the cathode material for the solid oxide electrolytic cell of item 1 or the cathode material for the solid oxide electrolytic cell prepared by the method of any one of items 2-5 in preparing a solid oxide electrolytic cell.
7. A method for preparing a solid oxide electrolytic cell, characterized in that, the method comprises steps of:
   B1: tableting an electrolyte powder, and calcining, to obtain an electrolyte support;
   B2: preparing a cathode slurry from a cathode material and a binder, and preparing an anode slurry from an anode material and a binder;
   B3: applying the cathode slurry and the anode slurry respectively on each of the two sides of the electrolyte support by screen printing, calcining, then placing the side containing the cathode material in a reductive atmosphere for reduction;
   wherein the cathode material is the cathode material of item 1 or the cathode material prepared by the method of any one of items 2-5.
8. The method of item 7, characterized in that, in step B1, the electrolyte is selected from yttria doped zirconia
9. The method of item 7 or 8, characterized in that, in step B1, the calcining is operated under conditions of: at a calcination temperature of 1300-1500°C, for a calcination time of 2-4h
10. The method of any one of items 7-9, characterized in that, in step B2, the anode material is selected from perovskite oxide materials;
   preferably, the anode material is one or more selected from the group consisting of La_{0.6}Sr_{0.4}CoO_{3-δ}, La_{0.6}Sr_{0.4}Co_{0.8}Fe_{0.2}O_{3-δ} and La_{0.6}Sr_{0.4}MnO_{3-δ}.
11. The method of item 7, characterized in that, in step B3, the calcining is operated under conditions of: at a calcination temperature of 600-800°C, for a calcination time of 1-2h.
12. The method of item 7, characterized in that, in step B3, the reductive atmosphere is a mixture of hydrogen and nitrogen:
   preferably, the mixture of hydrogen and nitrogen comprises hydrogen in a volume fraction of 10-20%.
13. The method of item 7, characterized in that, in step B3, the reduction is operated under conditions of: at a reduction temperature of 800°C, for a reduction time of 1-3h.
14. The solid oxide electrolytic cell prepared by the method of any one of items 7-13.
15. Use of the solid oxide electrolytic cell of item 14 in electrolyzing water vapor and/or carbon dioxide.

As compared with technology of prior art, the present invention may have the following advantages.
1. The cathode material for the solid oxide electrolytic cell in accordance with the present disclosure is a perovskite oxide, which has excellent conductivity for oxygen ions at high temperature. The cathode material in accordance with the present disclosure involves copper and nickel, which improves catalytic activity for the electrolysis of carbon dioxide and high-temperature water vapor. In addition, introducing copper and nickel into the perovskite oxide leads to a synergistic effect, which is advantageous for efficiently electrolyzing water vapor and/or carbon dioxide.
2. For a solid oxide electrolytic cell based on the cathode material for the solid oxide electrolytic cell in accordance with the present disclosure, the cathode material is reduced in a reductive atmosphere, resulting in the in-situ exsolution of Cu-Ni alloy on the surface thereof. The exsolved Cu-Ni alloy grows on the surface of the perovskite oxide body in the form of nanoparticles. The Cu-Ni alloy nanoparticles present on the surface substantially improve the catalytic activity, and improve the carbon deposition resistance performance. The obtained solid oxide electrolytic cell can achieve continuous and stable high-temperature electrolysis of water vapor and/or carbon dioxide at a temperature of 800°C and an electrolysis current density of 0.5A/cm² or more, thereby having good prospects for industrial application.

### Description of the drawings

Fig. 1 is a schematic of a solid oxide electrolytic cell in accordance with the present disclosure;
Fig. 2 are SEM and DES results obtained in Test 1;
Fig. 3 is an XRD result obtained in Test 1;
Fig. 4 is a result for the operation of high-temperature electrolysis of water vapor in Test 3;
Fig. 5 is a result for the operation of high-temperature electrolysis of carbon dioxide in Test 3;
Fig. 6 are SEM images of the solid oxide electrolytic cell of Example 1 before and after the operation of high-temperature electrolysis of carbon dioxide in Test 3.

### reference numbers

1 anode
2 solid electrolyte
3 cathode
4 Cu-Ni alloy nanoparticles

### Detailed description

The present invention will be further described hereinafter in detail with reference to embodiments thereof. It should be noted that the described embodiments are provided for illustration purpose only, and are not intended to be limiting in any manner.

It should be understood that any values disclosed herein (including the endpoints in the ranges) are not limited to the precise value, but to encompass values close to those values. In addition, for ranges of values, it is possible to combine between the endpoints of each of the ranges, between the endpoints of each of the ranges and the individual points, and between the individual points to give one or more new ranges of values as if these ranges of values are specifically disclosed herein.

Other than in the examples, all values of parameters in this specification are to be understood as being modified in all instances by the term "about" whether or not "about" actually appears before the values.

In one embodiment, provided in the present disclosure is a cathode material for a solid oxide electrolytic cell, having a molecular formula of LaₓSr₁₋ₓFe_{0.8}Cu_{y}Ni_{0.2-y}O_{3-δ}, wherein 0.1<x<0.9, 0.01≤y<0.2, and 0≤δ≤0.5.

Preferably, 0.2≤x≤0.8; further preferably, 0.4≤x≤0.6. For example, x may be 0.1, 0.2, 0.3, 0.4, 0.5, 0.6, 0.7, 0.8 or 0.9. In one variant, x is 0.6.

Preferably, 0.05<y<0.15, further preferably, 0.08<y<0.12. For example, y may be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18 or 0.09. In one variant, y is 0.1.

In one variant, the cathode material for the solid oxide electrolytic cell has a molecular formula of La_{0.6}Sr_{0.4}Fe_{0.8}Cu_{y}Ni_{0.2-y}O_{3-δ}, wherein 0.01≤y<0.2 and 0≤δ≤0.5.

δ represents the number of oxygen vacancies.

In one variant, the cathode material in accordance with the present disclosure may further comprise Cu-Ni alloy nanoparticles on the surface thereof.

The cathode material in accordance with the present disclosure is a perovskite oxide. The cathode material in the form of perovskite oxide may have excellent conductivity for oxygen ions at high temperature. When used in a solid oxide electrolytic cell, the cathode material is subjected to reduction, resulting in the in-situ exsolution of Cu-Ni alloy. The exsolved Cu-Ni alloy grows on the surface of the perovskite oxide body in the form of nanoparticles. The perovskite oxide body and the Cu-Ni alloy may lead to a synergistic effect, achieving the efficient electrolysis of water vapor and/or carbon dioxide. The presence of the in-situ exsolved Cu-Ni alloy nanoparticles on the surface of the perovskite oxide body makes Ni and Cu cooperate with each other, thereby substantially improving the catalytic activity of the cathode for the electrolysis of carbon dioxide/ high-temperature water vapor. At the same time, the in-situ exsolved Cu-Ni alloy nanoparticles cover at least a part of the surface of the perovskite phase, leading to advantageous carbon deposition resistance performance. It solves the problem of electrode carbon deposition that is prone to occur during high-temperature electrolysis of carbon dioxide with traditional solid oxide electrolytic cells, and thereby substantially improves the operation stability of the resulting electrolytic cell.

In the second aspect, provided in the present disclosure is a method for preparing the above cathode material for the solid oxide electrolytic cell, comprising steps of:
mixing a lanthanum salt, a strontium salt, an iron salt, a copper salt, a nickel salt, and optionally, a complexing agent, and then subjecting to drying and calcining, to obtain the cathode material;
wherein lanthanum, strontium, iron, copper and nickel of the lanthanum salt, the strontium salt, the iron salt, the copper salt and the nickel salt are in a molar ratio of x:(1-x):0.8:y:(0.2-y), wherein 0.1≤x≤0.9 and 0.01 <y<0.2.

As used herein, the expression "optionally, a complexing agent" refers to the fact that the complexing agent may or may not be added when mixing the lanthanum salt, the strontium salt, the iron salt, the copper salt and the nickel salt. Preferably, the complexing agent is added.

In one embodiment, the method may comprise steps of:
A1: mixing the lanthanum salt, the strontium salt, the iron salt, the copper salt, the nickel salt and water, to obtain a mixed solution;
A2: mixing the mixed solution with a complexing agent, adjusting pH of the obtained mixture to 7-10, then drying and calcining, to obtain the cathode material;
wherein, in step A1, lanthanum, strontium, iron, copper and nickel of the lanthanum salt, the strontium salt, the iron salt, the copper salt and the nickel salt are in a molar ratio of x:(1-x):0.8:y:(0.2-y), wherein 0.1≤x≤0.9 and 0.01≤y<0.2.

In one embodiment, the lanthanum salt, the strontium salt, the iron salt, the copper salt, and the nickel salt are each independently a water-soluble salt, preferably each independently one or more salts selected from the group consisting of chlorides, sulfates and nitrates, more preferably all nitrates.

In one embodiment, the complexing agent is one or more selected from the group consisting of ethanolamine complexing agents, aminocarboxylic acid complexing agents, hydroxyaminocarboxylic acid complexing agents and carboxylate complexing agents, preferably at least one selected from the group consisting of diethanolamine, ethylenediamine tetraacetic acid (EDTA) and salts thereof (such as potassium salt, sodium salt, and the like), diethylenetriamine pentaacetic acid (DTPA), hydroxyethylenediamine tetraacetic acid (HEDTA), dihydroxyglycine and salts thereof, and hydroxyethylaminoacetic acid (DHEG) and salts thereof, more preferably ethylenediamine tetraacetic acid.

There is no special limitation on the method for mixing in step A1. It is possible to use various mixing methods commonly used in the art, for example, stirring, ultrasonic mixing, and the like.

Preferably, in step A2, ethylenediamine tetraacetic acid and total metal ions in the mixed solution are in a molar ratio of 1-1.5:1. For example, ethylenediamine tetraacetic acid and total metal ions in the mixed solution may be in a molar ratio of 1:1, 1.1:1, 1.2:1, 1.3:1, 1.4:1 or 1.5:1.

Preferably, metal ions are present in the mixed solution in a total content of 1-2mol/L. For example, it may be 1mol/L, 1.1mol/L, 1.2mol/L, 1.3mol/L, 1.4mol/L, 1.5mol/L, 1.6mol/L, 1.7mol/L, 1.8mol/L, 1.9mol/L or 2mol/L.

In step A2, pH is adjusted to 7-10, preferably 8-9, to convert the mixture into a gel. In one variant, pH may be adjusted by using aqueous ammonia.

In step A2, the drying may be operated at a temperature of 100-150°C.

In step A2, the calcining may be operated under conditions of: at a calcination temperature of 600-800°C, for a calcination time of 1-2h. For example, the calcination temperature may be 600°C, 620°C, 640°C, 650°C, 660°C, 680°C, 700°C, 720°C, 740°C, 750°C, 760°C, 780°C or 800°C; and the calcination time may be 1h, 1.1h, 1.2h, 1.3h, 1.4h, 1.5h, 1.6h, 1.7h, 1.8h, 1.9h or 2h.

In step A2, the calcining may comprise steps of: heating to the calcination temperature at a rate of 5-10°C/min, and calcining at the calcination temperature.

In step A2, the calcining is operated under an oxygen-containing atmosphere. For example, the oxygen-containing atmosphere may be oxygen, air or ozone.

In the third aspect, provided in the present disclosure is use of the above mentioned cathode material for the solid oxide electrolytic cell or the cathode material for the solid oxide electrolytic cell prepared by the above mentioned method in preparing a solid oxide electrolytic cell.

Preferably, the solid oxide electrolytic cell is used for electrolyzing water vapor or carbon dioxide.

In the fourth aspect, provided in the present disclosure is a method for preparing a solid oxide electrolytic cell, comprising steps of:
applying an anode material and a cathode material respectively on each of the two sides of a solid electrolyte; and
reducing the cathode material,
wherein the cathode material is the above mentioned cathode material or the cathode material prepared by the above mentioned method.

In the method in accordance with the present disclosure, the electrolyte may be selected from various electrolyte materials commonly used in the art. Preferably, the electrolyte is selected from the group consisting of yttria-doped zirconia (or yttria-stabilized zirconia, YSZ), gadolinia-doped ceria (GDC), lanthanum strontium gallium magnesium oxides (LSGM), and the like, preferably YSZ.

In one embodiment, the solid electrolyte may be obtained by a step of:
B1: tableting an electrolyte powder, and calcining, to obtain the solid electrolyte.

The calcining of the electrolyte powder may impart it with higher strength. In step B1, the calcining may be operated under conditions of: at a calcination temperature of 1300-1500°C, for a calcination time of 2-4h. For example, the calcination temperature may be 1300°C, 1350°C, 1400°C or 1500°C; and the calcination time may be 2h, 3h or 4h.

In one embodiment, applying the anode material and the cathode material respectively on each of the two sides of the solid electrolyte may comprise steps of:
B2: preparing a cathode slurry from the cathode material and a binder, and preparing an anode slurry from the anode material and a binder; and
B3: applying the cathode slurry and the anode slurry respectively on each of the two sides of the solid electrolyte, and then calcining, to form a cathode and an anode respectively on each side of the solid electrolyte.

In step B2, preparing the cathode slurry from the cathode material and the binder may comprise steps of:
mixing the cathode material and the liquid binder, and subjecting to grinding, to obtain the cathode slurry.

Preferably, the cathode material and the liquid binder are used in a weight ratio of 0.5-1.5:1. For example, the ratio may be 3:2, 4:3, 1:1, 3:4 or 2:3.

In step B2, preparing the anode slurry from the anode material and the binder may comprise steps of:
mixing the anode material and the liquid binder, and subjecting to grinding, to obtain the anode slurry.

Preferably, the anode material and the liquid binder are used in a weight ratio of 0.5-1.5:1. For example, the ratio may be 3:2, 4:3, 1:1, 3:4 or 2:3.

There is no special limitation on the binder in the present disclosure. Various binders conventionally used in the art may be used. For example, the binder may be celluloses, such as methyl cellulose, ethyl cellulose, carboxymethyl cellulose, carboxyethyl cellulose, and the like. Other binders, such as polyvinyl butyral (PVB), sodium polyacrylate (NaPAA), and the like, may also be used. For ease of operation, the binder is used in the form of a liquid binder. The liquid binder is usually formed by mixing a small molecule compound and the binder. In one embodiment, the liquid binder is a mixture of terpineol and ethyl cellulose; preferably, a mixture of terpineol and ethyl cellulose in a weight ratio of 15-25:1. In one variant, the liquid binder is a mixture of ethanol and polyvinyl butyral.

In step B2, the anode material is selected from perovskite oxide materials. Preferably, the anode material is one or more selected from the group consisting of La_{0.6}Sr_{0.4}CoO_{3-δ} (LSC) , La_{0.6}Sr_{0.4}Co_{0.8}Fe_{0.2}O_{3-δ} and La_{0.6}Sr_{0.4}MnO_{3-δ}, wherein 0≤δ≤0.5.

There is no special limitation on the method for applying the cathode slurry and the anode slurry in the present disclosure. It is possible to adopt those commonly used in the art, such as spin coating, blade coating, spray coating, screen printing, and the like. The examples illustrated the cases wherein screen printing is used.

In step B3, the calcining may be operated under conditions of: at a calcination temperature of 600-800°C, for a calcination time of 1-2h. For example, the calcination temperature may be 600°C, 620°C, 640°C, 650°C, 660°C, 680°C, 700°C, 720°C, 740°C, 750°C, 760°C, 780°C or 800°C; and the calcination time may be 1h, 1.1h, 1.2h, 1.3h, 1.4h, 1.5h, 1.6h, 1.7h, 1.8h, 1.9h or 2h.

In step B3, the calcining may comprise steps of: heating to the calcination temperature at a rate of 5-10°C/min, and calcining at the calcination temperature.

In step B3, the calcining is operated under an oxygen-containing atmosphere. For example, the oxygen-containing atmosphere may be oxygen, air or ozone.

In one embodiment, reducing the cathode material may comprise a step of: placing the side of the solid electrode containing the cathode material in a reductive atmosphere, to reduce the cathode material.

Preferably, the reductive atmosphere is a mixture of hydrogen and nitrogen. Further preferably, the mixture of hydrogen and nitrogen comprises hydrogen in a volume fraction of 10-20%. For example, hydrogen may be in a volume fraction of 10%, 11%, 12%, 13%, 14%, 15%, 16%, 17%, 18%, 19% or 20%.

The reduction may be operated under conditions of: at a reduction temperature of 750-850°C, for a reduction time of 1-3h. For example, the reduction temperature may be 750°C, 760°C, 770°C, 780°C, 790°C, 800°C, 810°C, 820°C, 830°C, 840°C or 850°C; and the reduction time may be 1h, 1.5h, 2h, 2.5h or 3h.

The reduction may make Cu-Ni alloy nanoparticles form in situ on the surface of the cathode.

In the fifth aspect, provided in the present disclosure is a solid oxide electrolytic cell prepared by the above mentioned method. The solid oxide electrolytic cell may be of a structure commonly used in the art. Generally, the oxide electrolytic cell may comprise: an anode, a cathode and a solid electrolyte between the cathode and the anode, which are arranged in order.

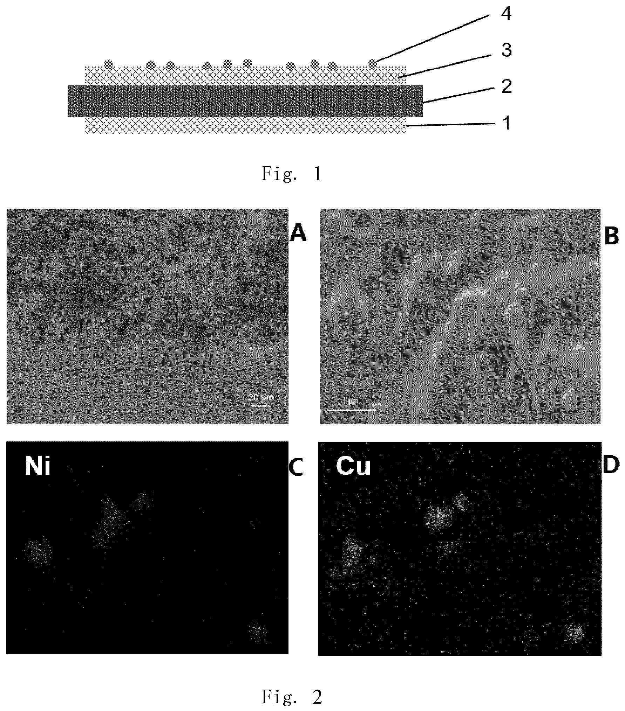

Fig. 1 is a cross-sectional schematic of a solid oxide electrolytic cell in accordance with the present disclosure. As shown in Fig. 1, the solid oxide electrolytic cell comprises an anode 1, a solid electrolyte 2 and a cathode 3, which are arranged in order, wherein Cu-Ni alloy nanoparticles 4 are on the surface of the cathode 3.

By using the solid oxide electrolytic cell prepared by the method in accordance with the present disclosure, it is possible to not only achieve the electrolysis of high-temperature water vapor, but also ensure the efficient and stable operation of the electrolysis of CO₂, thereby imparting the invention with good prospects for efficiently converting CO₂ and H₂O into synthesis gas.

In the sixth aspect, provided in the present disclosure is use of the above mentioned solid oxide electrolytic cell in electrolyzing water vapor or carbon dioxide.

### Examples

The invention will be described in detail below through the examples. The examples are intended to illustrate and not to limit the invention in any way.

Materials used in the examples were all commercially available.

### Example 1

Preparation of a cathode material for a solid oxide electrolytic cell: 0.03 mol of lanthanum nitrate, 0.02 mol of strontium nitrate, 0.04 mol of iron nitrate, 0.005 mol of copper nitrate and 0.005 mol of nickel nitrate were added to 100 mL of deionized water, stirred to dissolve the salts, to obtain a mixed solution. 0.1 mol of ethylenediamine tetraacetic acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0.1}Ni_{0.1}O_{3-δ}.

Preparation of a solid oxide electrolytic cell: the electrolyte (yttria-doped zirconia, YSZ) powder was tableted and calcined at 1400°C for 2h in a muffle furnace, to obtain a solid electrolyte. The obtained cathode material for the solid oxide electrolytic cell was mixed with a liquid binder in a weight ratio of 1:1, and then subjected to grinding, to prepare a cathode slurry; and an anode material (La_{0.6}Sr_{0.4}CoO_{3-δ}, LSC) was mixed with a liquid binder in a weight ratio of 1:1, and then subjected to grinding, to prepare an anode slurry, wherein the liquid binder was a mixture of terpineol and ethyl cellulose in a weight ratio of 20:1. The cathode slurry and the anode slurry were applied on each of the two sides of the solid electrolyte by screen printing, and subjected to heating to a temperature of 800°C at a rate of 5°C/min in a muffle furnace, and calcining at this temperature for 2h. Then, the side of the solid electrolyte containing the cathode material was placed in a reductive atmosphere (a mixture of 10% hydrogen and 90% nitrogen) to reduce at 800°C for 2 h, to obtain the solid oxide electrolytic cell S1.

### Example 2

Preparation of a cathode material for a solid oxide electrolytic cell: 0.03 mol of lanthanum nitrate, 0.02 mol of strontium nitrate, 0.04 mol of iron nitrate, 0.0025 mol of copper nitrate and 0.0075 mol of nickel nitrate were added to 100 mL of deionized water, stirred to dissolve the salts, to obtain a mixed solution. 0.1 mol of ethylenediamine tetraacetic acid was added to the mixed solution, and aqueous ammonia was added to adjust pH to 9 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0..05}N_{0.15}O_{3-δ}.

Preparation of a solid oxide electrolytic cell: the electrolyte YSZ powder was tableted and calcined at 1400°C for 2h in a muffle furnace, to obtain a solid electrolyte. The obtained cathode material for the solid oxide electrolytic cell was mixed with a liquid binder in a weight ratio of 1:1, and then subjected to grinding, to prepare a cathode slurry; and LSC powder was mixed with a liquid binder in a weight ratio of 1:1, and then subjected to grinding, to prepare an anode slurry, wherein the liquid binder was a mixture of terpineol and ethyl cellulose in a weight ratio of 20:1. The cathode slurry and the anode slurry were applied on each of the two sides of the solid electrolyte by screen printing, and subjected to heating to a temperature of 800°C at a rate of 5°C/min in a muffle furnace, and calcining at this temperature for 2h. Then, the side of the solid electrolyte containing the cathode material was placed in a reductive atmosphere (a mixture of 10% hydrogen and 90% nitrogen) to reduce at 800°C for 2 h, to obtain the solid oxide electrolytic cell S2.

### Example 3

Preparation of a cathode material for a solid oxide electrolytic cell: 0.03 mol of lanthanum nitrate, 0.02 mol of strontium nitrate, 0.04 mol of iron nitrate, 0.006 mol of copper nitrate and 0.004 mol of nickel nitrate were added to 100 mL of deionized water, stirred to dissolve the salts, to obtain a mixed solution. 1.05 mol of ethylenediamine tetraacetic acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0.12}Ni_{0.08}O_{3-δ}.

Preparation of a solid oxide electrolytic cell: the electrolyte YSZ powder was tableted and calcined at 1400°C for 2h in a muffle furnace, to obtain a solid electrolyte. The obtained cathode material for the solid oxide electrolytic cell was mixed with a liquid binder in a weight ratio of 1:1, and then subjected to grinding, to prepare a cathode slurry; and LSC powder was mixed with a liquid binder in a weight ratio of 1:1, and then subjected to grinding, to prepare an anode slurry, wherein the liquid binder was a mixture of terpineol and ethyl cellulose in a weight ratio of 20:1. The cathode slurry and the anode slurry were applied on each of the two sides of the solid electrolyte by screen printing, and subjected to heating to a temperature of 800°C at a rate of 5°C/min in a muffle furnace, and calcining at this temperature for 2h. Then, the side of the solid electrolyte containing the cathode material was placed in a reductive atmosphere (a mixture of 10% hydrogen and 90% nitrogen) to reduce at 800°C for 2 h, to obtain the solid oxide electrolytic cell S3.

### Example 4

Preparation of a cathode material for a solid oxide electrolytic cell: 0.03 mol of lanthanum nitrate, 0.02 mol of strontium nitrate, 0.04 mol of iron nitrate, 0.004 mol of copper nitrate and 0.006 mol of nickel nitrate were added to 100 mL of deionized water, stirred to dissolve the salts, to obtain a mixed solution. 0.11 mol of ethylenediamine tetraacetic acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0.08}Ni_{0.12}O_{3-δ}.

Preparation of a solid oxide electrolytic cell: the electrolyte YSZ powder was tableted and calcined at 1400°C for 2h in a muffle furnace, to obtain a solid electrolyte. The obtained cathode material for the solid oxide electrolytic cell was mixed with a liquid binder in a weight ratio of 1:1, and then subjected to grinding, to prepare a cathode slurry; and LSC powder was mixed with a liquid binder in a weight ratio of 1:1, and then subjected to grinding, to prepare an anode slurry, wherein the liquid binder was a mixture of terpineol and ethyl cellulose in a weight ratio of 20:1. The cathode slurry and the anode slurry were applied on each of the two sides of the solid electrolyte by screen printing, and subjected to heating to a temperature of 800°C at a rate of 5°C/min in a muffle furnace, and calcining at this temperature for 2h. Then, the side of the solid electrolyte containing the cathode material was placed in a reductive atmosphere (a mixture of 10% hydrogen and 90% nitrogen) to reduce at 800°C for 2 h, to obtain the solid oxide electrolytic cell S4.

### Example 5

Preparation of a cathode material for a solid oxide electrolytic cell: 0.06 mol of lanthanum nitrate, 0.04 mol of strontium nitrate, 0.08 mol of iron nitrate, 0.01 mol of copper nitrate and 0.01 mol of nickel nitrate were added to 100 mL of deionized water, stirred to dissolve the salts, to obtain a mixed solution. 0.22 mol of ethylenediamine tetraacetic acid was added to the mixed solution, and aqueous ammonia was added to adjust pH to 8 under stirring, to convert the obtained mixture into a gel. The gel was dried at 120°C; then subjected to heating to a temperature of 750°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0.1}Ni_{0.1}O_{3-δ}.

Preparation of a solid oxide electrolytic cell: the electrolyte YSZ powder was tableted and calcined at 1450°C for 2h in a muffle furnace, to obtain a solid electrolyte. The obtained cathode material for the solid oxide electrolytic cell was mixed with a liquid binder in a weight ratio of 2:3, and then subjected to grinding, to prepare a cathode slurry; and LSC powder was mixed with a liquid binder in a weight ratio of 2:3, and then subjected to grinding, to prepare an anode slurry, wherein the liquid binder was a mixture of terpineol and ethyl cellulose in a weight ratio of 21:1. The cathode slurry and the anode slurry were applied on each of the two sides of the solid electrolyte obtained in Step B1 by screen printing, and subjected to heating to a temperature of 800°C at a rate of 5°C/min in a muffle furnace, and calcining at this temperature for 2h. Then, the side of the solid electrolyte containing the cathode material was placed in a reductive atmosphere (a mixture of 10% hydrogen and 90% nitrogen) to reduce at 800°C for 2 h, to obtain the solid oxide electrolytic cell S5.

### Example 6

Preparation of a cathode material for a solid oxide electrolytic cell: 0.03 mol of lanthanum nitrate, 0.02 mol of strontium nitrate, 0.04 mol of iron nitrate, 0.005 mol of copper nitrate and 0.005 mol of nickel nitrate were added to 100 mL of deionized water, stirred to dissolve the salts, to obtain a mixed solution. 0.14 mol of ethylenediamine tetraacetic acid was added to the mixed solution, and aqueous ammonia was added to adjust pH to 9 under stirring, to convert the obtained mixture into a gel. The gel was dried at 100°C; then subjected to heating to a temperature of 700°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0.1}Ni_{0.1}O_{3-δ}.

Preparation of a solid oxide electrolytic cell: The electrolyte YSZ powder was tableted and calcined at 1500°C for 2h in a muffle furnace, to obtain a solid electrolyte. The obtained cathode material for the solid oxide electrolytic cell was mixed with a liquid binder in a weight ratio of 3:2, and then subjected to grinding, to prepare a cathode slurry; and LSC powder was mixed with a liquid binder in a weight ratio of 3:2, and then subjected to grinding, to prepare an anode slurry, wherein the liquid binder was a mixture of terpineol and ethyl cellulose in a weight ratio of 19:1. The cathode slurry and the anode slurry were applied on each of the two sides of the solid electrolyte by screen printing, and subjected to heating to a temperature of 750°C at a rate of 5°C/min in a muffle furnace, and calcining at this temperature for 2h. Then, the side of the solid electrolyte containing the cathode material was placed in a reductive atmosphere (a mixture of 10% hydrogen and 90% nitrogen) to reduce at 800°C for 2 h, to obtain the solid oxide electrolytic cell S6.

### Example 7

Preparation of a cathode material for a solid oxide electrolytic cell: 0.03 mol of lanthanum nitrate, 0.02 mol of strontium nitrate, 0.04 mol of iron nitrate, 0.005 mol of copper nitrate and 0.005 mol of nickel nitrate were added to 100 mL of deionized water, stirred to dissolve the salts, to obtain a mixed solution. 0.12 mol of ethylenediamine tetraacetic acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0.1}Ni_{0.1}O_{3-δ}.

Preparation of a solid oxide electrolytic cell: the electrolyte YSZ powder was tableted and calcined at 1400°C for 2h in a muffle furnace, to obtain a solid electrolyte. The obtained cathode material for the solid oxide electrolytic cell was mixed with a liquid binder in a weight ratio of 1:1, and then subjected to grinding, to prepare a cathode slurry; and LSC powder was mixed with a liquid binder in a weight ratio of 1:1, and then subjected to grinding, to prepare an anode slurry, wherein the liquid binder was a mixture of terpineol and ethyl cellulose in a weight ratio of 20:1. The cathode slurry and the anode slurry were applied on each of the two sides of the solid electrolyte by screen printing, and subjected to heating to a temperature of 800°C at a rate of 5°C/min in a muffle furnace, and calcining at this temperature for 2h. Then, the side of the solid electrolyte containing the cathode material was placed in a reductive atmosphere (a mixture of 5% hydrogen and 95% nitrogen) to reduce at 800°C for 1.5 h, to obtain the solid oxide electrolytic cell S7.

### Example 8

Preparation of a cathode material for a solid oxide electrolytic cell: 0.03 mol of lanthanum nitrate, 0.02 mol of strontium nitrate, 0.04 mol of iron nitrate, 0.005 mol of copper nitrate and 0.005 mol of nickel nitrate were added to 100 mL of deionized water, stirred to dissolve the salts, to obtain a mixed solution. 0.13 mol of ethylenediamine tetraacetic acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.8}Cu_{0.1}Ni_{0.1}O_{3-δ}.

Preparation of a solid oxide electrolytic cell: the electrolyte YSZ powder was tableted and calcined at 1500°C for 1.5h in a muffle furnace, to obtain a solid electrolyte. The obtained cathode material for the solid oxide electrolytic cell was mixed with a liquid binder in a weight ratio of 1:1, and then subjected to grinding, to prepare a cathode slurry; and LSC powder was mixed with a liquid binder in a weight ratio of 1:1, and then subjected to grinding, to prepare an anode slurry, wherein the liquid binder was a mixture of terpineol and ethyl cellulose in a weight ratio of 20:1. The cathode slurry and the anode slurry were applied on each of the two sides of the solid electrolyte by screen printing, and subjected to heating to a temperature of 800°C at a rate of 5°C/min in a muffle furnace, and calcining at this temperature for 2h. Then, the side of the solid electrolyte containing the cathode material was placed in a reductive atmosphere (a mixture of 20% hydrogen and 80% nitrogen) to reduce at 800°C for 3h, to obtain the solid oxide electrolytic cell S8.

### Comparative example 1

The preparation of the solid oxide electrolytic cell of Example 1 was repeated except that the cathode material for the solid oxide electrolytic cell obtained in Example 1 was replaced with a commercially available cathode material Ni-YSZ, to obtain a solid oxide electrolytic cell D1.

### Comparative Example 2

Preparation of a cathode material for a solid oxide electrolytic cell: 0.03 mol of lanthanum nitrate, 0.02 mol of strontium nitrate and 0.05 mol of iron nitrate were added to 100 mL of deionized water, to obtain a mixed solution. 0.12 mol of citric acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}FeO_{3-δ}.

The preparation of the solid oxide electrolytic cell of Example 1 was repeated with the obtained cathode material for the solid oxide electrolytic cell, to obtain a solid oxide electrolytic cell D2.

### Comparative Example 3

Preparation of a cathode material for a solid oxide electrolytic cell: 0.03 mol of lanthanum nitrate, 0.02 mol of strontium nitrate, 0.045 mol of iron nitrate and 0.005 mol of nickel nitrate were added to 100 mL of deionized water, to obtain a mixed solution. 0.1 mol of ethylenediamine tetraacetic acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.9}Ni_{0.1}O_{3-δ}.

The preparation of the solid oxide electrolytic cell of Example 1 was repeated with the obtained cathode material for the solid oxide electrolytic cell, to obtain a solid oxide electrolytic cell D3.

### Comparative Example 4

Preparation of a cathode material for a solid oxide electrolytic cell: 0.03 mol of lanthanum nitrate, 0.02 mol of strontium nitrate, 0.045 mol of iron nitrate and 0.005 mol of copper nitrate were added to 100 mL of deionized water, to obtain a mixed solution. 0.11 mol of ethylenediamine tetraacetic acid was added to the mixed solution, and aqueous ammonia was added to adjust pH to 8 under stirring, to convert the obtained mixture into a gel. The gel was dried at 100°C; then subjected to heating to a temperature of 800°C at a heating rate of 5°C/min in a muffle furnace under an air atmosphere, and calcined at the temperature for 2 hours, to obtain a powder of the cathode material for the solid oxide electrolytic cell, which has a molecular formula of La_{0.6}Sr_{0.4}Fe_{0.9}Cu_{0.1}O_{3-δ}.

The preparation of the solid oxide electrolytic cell of Example 1 was repeated with the obtained cathode material for the solid oxide electrolytic cell, to obtain a solid oxide electrolytic cell D4.

### Test 1

The solid oxide electrolytic cell obtained in Example 1 was tested using a Gemini SEM 500 scanning electron microscope (SEM) from Carl Zeiss China, under conditions of: an acceleration voltage of 10 kV and an electron beam current of 10 nA. The interface between the cathode and the solid electrolyte was shown in A in Fig. 2; and the surface morphology of the cathode was shown in B in Fig. 2. In addition, a Gemini SEM 500 scanning electron microscope from Carl Zeiss China equipped with an energy dispersive X-ray spectrometer (EDS) was used to characterize the distribution of elements on the surface of the tested area. The results were shown in C and D in Fig. 2.

As shown in Fig. 2, in the solid oxide electrolytic cell in accordance with the present disclosure, the solid electrolyte had a dense morphology, whereas the cathode had a loose and porous morphology. The cathode and the solid electrolyte were tightly combined. In addition, there are many small nano-scale particles on the surface of the cathode of the solid oxide electrolytic cell, whose main components were Ni and Cu as detected by EDS.

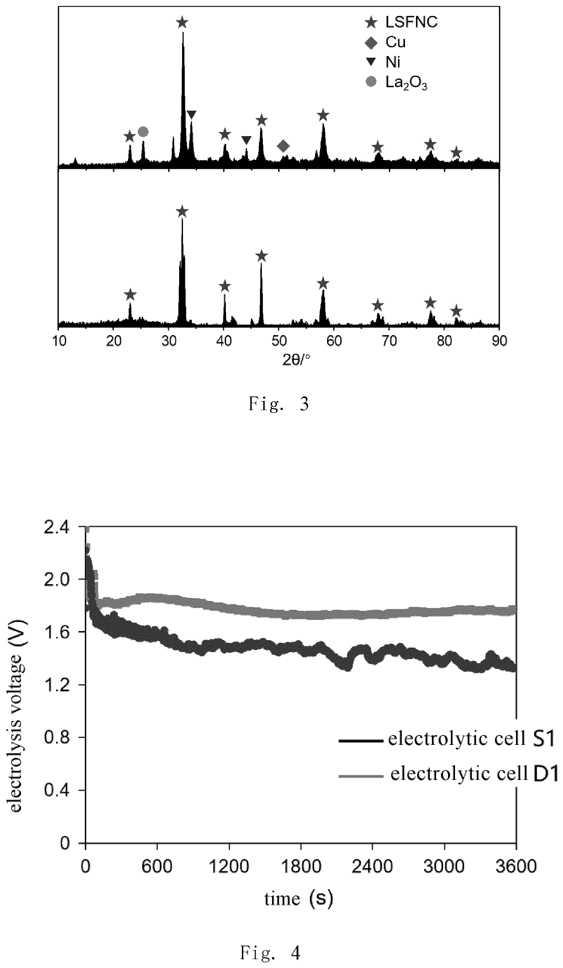

The changes of the cathode material for the solid oxide electrolytic cell of Example 1 before and after reduction were detected by using a D8 ADVANCE X-ray diffractometer (XRD) from Bruker, Germany. Fig. 3 showed the XRD pattern, where the bottom one was the XRD pattern of the cathode material for the solid oxide electrolytic cell before reduction, and the top one was the XRD pattern of the cathode material after reduction. As can be seen by comparing the two, the latter had new peaks at 2θ=34.1°, 2θ=44.6°, and 2θ=50.4°. After comparison with the standard PDF of copper and nickel, it was found that those new peaks corresponded to the Ni(110), Ni(111) and Cu(200) characteristic peaks of copper and nickel, respectively. Considering the results in Fig. 2 and Fig. 3 together, it can be judged that, during the reduction, metallic copper and nickel appeared on the surface of the cathode of the solid oxide electrolytic cell, thereby proving the formation of Cu-Ni alloy nanoparticles.

The XRD pattern of Figure 3 also showed that, before and after reduction, the cathode material for the solid oxide electrolytic cell of Example 1 was essentially consisting of oxide composite materials, with a small amount of single metal oxides, such as La₂O₃, indicating that the main component of the cathode material for the solid oxide electrolytic cell of Example 1 was a perovskite oxide.

### Test 2

The electrochemical performances of the solid oxide electrolytic cells obtained in Examples 1-8 and Comparative Examples 1-4 were tested by using an electrochemical workstation IM6ex from Zanher, Germany.

The sample to be tested was connected to the circuit and sealed to be subjected to testing for the polarization impedance of an electrolytic cell. The test was operated under conditions of: a temperature of 800°C, air as the atmosphere on the cathode side, a mixture of 40% water vapor, 10% hydrogen and 50% nitrogen as the atmosphere on the anode side, and a disturbance voltage of 10mV. The results of the polarization impedance of the solid oxide electrolytic cell were showed in Table 1.

**Table 1**

| | Polarization impedance (Ω cm²) |
|---|---|
| Ex. 1 | 2.82 |
| Ex. 2 | 3.42 |
| Ex. 3 | 4.02 |
| Ex. 4 | 3.15 |
| Ex. 5 | 2.98 |
| Ex. 6 | 3.07 |
| Ex. 7 | 3.36 |
| Ex. 8 | 2.88 |
| CE. 1 | 5.22 |
| CE. 2 | 10.97 |
| CEe 3 | 6.18 |
| CE. 4 | 7.73 |

As can be seen from Table 1, the solid oxide electrolytic cells using the cathode material in accordance with the present disclosure generally had lower polarization impedance, indicating that the cathode material in accordance with the present disclosure had excellent electrochemical performances.

### Test 3

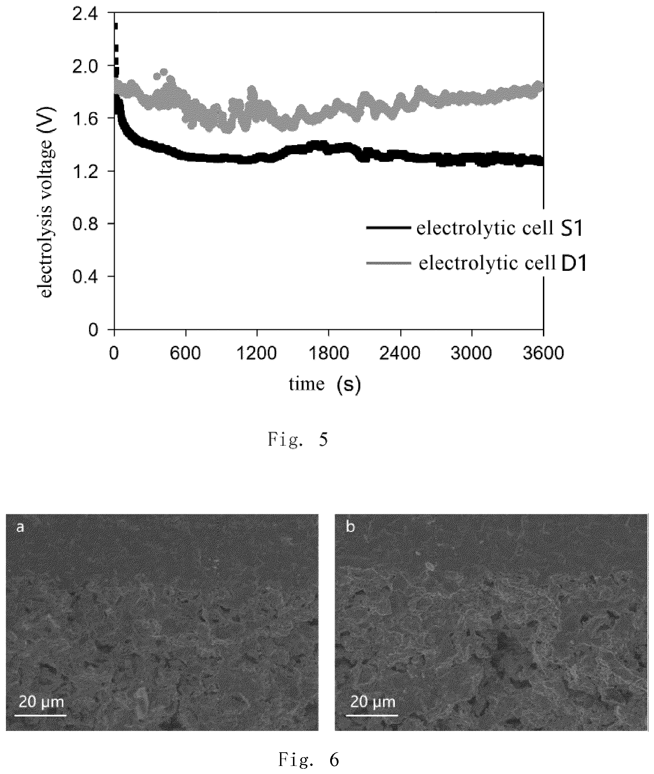

The solid oxide electrolysis cells S1 and D1 were respectively subjected to the high-temperature electrolysis of water vapor and the high-temperature electrolysis of carbon dioxide at 800°C and a constant current density of 0.5A/cm². The high-temperature electrolysis of water vapor was operated under conditions of: air as the atmosphere for anode, a mixture of 50% nitrogen and 50% water vapor as the atmosphere for cathode, and a normal pressure. The results of the high-temperature electrolysis of water vapor were shown in Fig. 4. The high-temperature electrolysis of carbon dioxide was operated under conditions of: air as the atmosphere for anode, a mixture of 50% nitrogen and 50% carbon dioxide as the atmosphere for cathode, and a normal pressure. The results of the high-temperature electrolysis of carbon dioxide were shown in Fig. 5.

As can be seen from Fig. 4 and Fig. 5, the high-temperature electrolysis of water vapor and the high-temperature electrolysis of carbon dioxide at 800°C were operated at a lower electrolysis voltage for the solid oxide electrolytic cell of Example 1 as compared with that for the solid oxide electrolytic cell of Comparative Example 1. Referring to Fig. 5, during the continuous electrolysis of carbon dioxide for 1 hour at a constant current density of 0.5A/cm² by using the solid oxide electrolytic cell of Comparative Example 1 (which was based on a cathode material Ni-YSZ), the electrolysis voltage increased significantly. However, during the electrolysis of carbon dioxide under the same conditions by using the solid oxide electrolytic cell of Example 1 (which was based on the cathode material La_{0.6}Sr_{0.4}Fe_{0.8}Cu_{0.1}Ni_{0.1}O_{3-δ}), the electrolysis voltage maintained substantially constant. It proved that the cathode material and the solid oxide electrolytic cell of Example 1 had a higher robustness for the high-temperature electrolysis of carbon dioxide.

The solid oxide electrolytic cell obtained in Example 1 was tested by scanning electron microscope (SEM) to detect the morphology thereof before and after the high-temperature electrolysis of carbon dioxide. The results were shown in Fig. 6. In the figure, a on the left was the morphology of the surface of the cathode before the high-temperature electrolysis of carbon dioxide, and b on the right was the morphology of the surface of the cathode after the high-temperature electrolysis of carbon dioxide. As can be seen by comparing the two, the morphology of the surface of the cathode did not change before and after the high-temperature electrolysis of carbon dioxide by using the solid oxide electrolytic cell obtained in Example 1, and no elemental carbon was detected on the surface. It further proved that the cathode material for solid oxide electrolytic cell and the solid oxide electrolytic cell obtained in Example 1 had excellent carbon deposition resistance performance.

As can be seen from the above tests, the solid oxide electrolytic cell prepared by using the cathode material in accordance with the present disclosure had excellent catalytic performances and stability, which was of great significance for achieving stable operation of the high-temperature electrolysis of water vapor and/or carbon dioxide.

The embodiments of the present invention have been described in detail above. However, the present invention is not limited thereto. Various simple modifications may be made to the embodiments of the present invention within the technical scope of the present invention, including the combinations of various technical features in any other suitable way. Those simple modifications and combinations should also be regarded as the contents disclosed herein and being within the protection scope of the present disclosure.

## Claims

1. A cathode material for a solid oxide electrolytic cell, having a molecular formula of LaₓSr₁₋ₓFe_{0.8}Cu_{y}Ni_{0.2-y}O_{3-δ}, wherein 0.1≤x≤0.9, 0.01≤y<0.2, and 0≤δ≤0.5.

2. The cathode material for a solid oxide electrolytic cell of claim 1, further comprising Cu-Ni alloy nanoparticles on the surface thereof.

3. A method for preparing the cathode material for the solid oxide electrolytic cell of claim 1, comprising steps of:
mixing a lanthanum salt, a strontium salt, an iron salt, a copper salt, a nickel salt and an optional complexing agent, and then subjecting to drying and calcining, to obtain the cathode material;
wherein lanthanum, strontium, iron, copper and nickel of the lanthanum salt, the strontium salt, the iron salt, the copper salt and the nickel salt are in a molar ratio of x:(1-x):0.8:y:(0.2-y), wherein 0.1≤x≤0.9 and 0.01 <y<0.2.

4. The method of claim 3, comprising steps of:
A1: mixing the lanthanum salt, the strontium salt, the iron salt, the copper salt, the nickel salt and water, to obtain a mixed solution;
A2: mixing the mixed solution with the complexing agent, adjusting pH of the obtained mixture to 7-10, then drying and calcining;
wherein, in step A1, lanthanum, strontium, iron, copper and nickel of the lanthanum salt, the strontium salt, the iron salt, the copper salt and the nickel salt are in a molar ratio of x:(1-x):0.8:y:(0.2-y), wherein 0.1≤x≤0.9 and 0.01≤y<0.2.

5. The method of claim 4, wherein the complexing agent is at least one selected from the group consisting of diethanolamine, ethylenediamine tetraacetic acid (EDTA) and salts thereof, diethylenetriamine pentaacetic acid (DTPA), hydroxyethylenediamine tetraacetic acid (HEDTA), dihydroxyglycine and salts thereof, and hydroxyethylaminoacetic acid (DHEG) and salts thereof,
preferably, the complexing agent is ethylenediamine tetraacetic acid, wherein ethylenediamine tetraacetic acid and metal ions in the mixed solution are in a molar ratio of 1-1.5:1, or
preferably, the mixed solution comprises metal ions in a total content of 1-2mol/L.

6. The method of any one of claims 4-5, wherein, in step A2, the calcining is operated under conditions of: at a calcination temperature of 600-800°C, for a calcination time of 1-2h.

7. A method for preparing a solid oxide electrolytic cell, comprising steps of:
applying an anode material and a cathode material respectively on each of the two sides of a solid electrolyte; and
reducing the cathode material,
wherein the cathode material is the cathode material of claim 1.

8. The method of claim 7, **characterized in that**, the solid electrolyte is obtained by a step of:
B1: tableting an electrolyte powder, and calcining, to obtain the solid electrolyte;
preferably, the electrolyte is yttria-doped zirconia; or
preferably, in step B1, the calcining is operated under conditions of: at a calcination temperature of 1300-1500°C, for a calcination time of 2-4h.

9. The method of claim 7, wherein applying the anode material and the cathode material respectively on each of the two sides of the solid electrolyte comprises steps of:
B2: preparing a cathode slurry from the cathode material and a binder, and preparing an anode slurry from the anode material and a binder;
B3: applying the cathode slurry and the anode slurry respectively on each of the two sides of the solid electrolyte, and calcining, to form a cathode and an anode respectively on each side of the solid electrolyte.

10. The method of claim 9, wherein
preparing the cathode slurry from the cathode material and the binder comprises steps of:
mixing the cathode material and the liquid binder, and subjecting to grinding, to obtain the cathode slurry; and
preparing the anode slurry from the anode material and the binder comprises steps of:
mixing the anode material and the liquid binder, and subjecting to grinding, to obtain the anode slurry;
preferably, the cathode material and the liquid binder are used in a weight ratio of 0.5-1.5:1; and the anode material and the liquid binder are used in a weight ratio of 0.5-1.5:1; or
preferably, the liquid binder is a mixture of terpineol and ethyl cellulose in a weight ratio of 15-25:1.

11. The method of any one of claims 7-10, wherein the anode material is selected from perovskite oxide materials;
preferably, the anode material is one or more selected from the group consisting of La_{0.6}Sr_{0.4}CoO_{3-δ}, La_{0.6}Sr_{0.4}Co_{0.8}Fe_{0.2}O_{3-δ} and La_{0.6}Sr_{0.4}MnO_{3-δ}, wherein 0<δ<0.5.

12. The method of claim 9, wherein, in step B3, the calcining is operated under conditions of: at a calcination temperature of 600-800°C, for a calcination time of 1-2h.

13. The method of claim 7, wherein reducing the cathode material comprises a step of: placing the side of the solid electrode containing the cathode material in a reductive atmosphere, to reduce the cathode material;
preferably, the reductive atmosphere is a mixture of hydrogen and nitrogen; more preferably, the reductive atmosphere is a mixture of hydrogen and nitrogen comprising hydrogen in a volume fraction of 10-20%; or
preferably, the reduction is operated under conditions of: at a reduction temperature of 800°C, for a reduction time of 1-3h; or
preferably, the reduction makes Cu-Ni alloy nanoparticles form in situ on the surface of the cathode.

14. A solid oxide electrolytic cell prepared by the method of any one of claims 7-13.

15. Use of the solid oxide electrolytic cell of claim 14 in electrolyzing water vapor and/or carbon dioxide.
